# EUROPÄISCHE PATENTSCHRIFT

(11) **EP 2 729 936 B1**
(45) Veröffentlichungstag und Bekanntmachung des Hinweises auf die Patenterteilung: **26.08.2015**
(21) Anmeldenummer: 12728411.5
(22) Anmeldetag: 20.06.2012
(51) Int. Cl.: F01K 25/08, G21C 15/18, G21D 5/00, G21D 5/08, F01K 25/10

(54) **EINRICHTUNG ZUR NOTKÜHLUNG EINER ANLAGE FÜR EXOTHERME PROZESSE**
DEVICE FOR EMERGENCY COOLING A SYSTEM FOR EXOTHERMIC PROCESSES
DISPOSITIF DE REFROIDISSEMENT D'URGENCE D'UNE INSTALLATION POUR PROCESSUS EXOTHERMIQUES

(30) Priorität: 06.07.2011 DE 102011107284
(43) Veröffentlichungstag der Anmeldung: 14.05.2014
(73) Patentinhaber: RWE Technology GmbH, 45128 Essen (DE)
(72) Erfinder: VON LAVANTE, Dominik, 47269 Duisburg (DE)
(74) Vertreter: Kierdorf Ritschel
(86) Internationale Anmeldenummer: PCT/EP2012/002614
(87) Internationale Veröffentlichungsnummer: WO 2013/004351

(56) Entgegenhaltungen:
- CH-A- 477 625
- DE-C2- 2 913 520
- US-A- 3 506 539
- US-A- 4 755 352
- US-A- 5 360 056

## Beschreibung

Die Erfindung betrifft eine Einrichtung zur Notkühlung einer Anlage für exotherme Prozesse mit wenigstens einem ersten Wärmeträger in einem geschlossenen Wärmeträgerkreislauf oder Wärmeträgerbehälter. Solche Anlagen für exotherme Prozesse sind beispielsweise Anlagen der chemischen Industrie, konventionelle Kraftwerke oder Kernkraftwerke. Bei Kernkraftwerken sind insbesondere die Reaktordruckbehälter und/oder die Primärkühlsysteme kritische Systeme, die insbesondere bei schweren Störungen der Kühlung bedürfen. Grundsätzlich sind Notkühlsysteme sinnvoll zur Abfuhr von Nachwärme aus Kernbrennstoffen, beispielsweise zur Abfuhr von Nachwärme aus Kern- oder Brennelementlagerbecken.

Es sind diverse Systeme zur Notkühlung bekannt, die entweder auf einer externe elektrische Versorgung angewiesen sind oder eine hinreichende Kühlwasserversorgung benötigen.

Eine Vorrichtung zum Kühlen und zum Schutz eines Reaktordruckbehälters bei Kernschmelzeunfällen ist beispielsweise aus der DE 198 46 057 B4 bekannt, wobei Zielsetzung des dort beschriebenen Verfahrens ist, durch Erhalten der Integrität des Reaktordruckbehälters die Kernschmelze innerhalb des Reaktordruckbehälters unter Vermeidung von Dampfexplosionen zu stabilisieren und nachfolgend ein Durchschmelzen der Bodenkalotte des Reaktordruckbehälters sowie weitere Folgeschäden zu verhindern. Bei dem in der DE 198 46 057 B4 beschriebenen Vorrichtung und dem entsprechend angewendeten Verfahren wird grundsätzlich ein Komplettverlust des Inventars des Reaktordruckbehälters in Kauf genommen.

Ein anderes Notkühlsystem für einen Druckwasserreaktor ist beispielweise in der DD 240 625 A1 beschrieben, wobei dieses System bei Eintritt eines Totalspannungsausfalls im Kernkraftwerk auf einer autonomen mit Elektroenergie versorgte Durchsatzregelung für einen aus Kernflutbehältern eingespeistes Notkühlmittel angewiesen ist.

Aus der DE 29 13 520 C2 sind ein Verfahren und eine Vorrichtung zur Wärmeabführung aus einem Lagerraum zur Zwischenlagerung verbrauchter Brennelemente bekannt, bei welchem ein im Kreislauf durch den Lagerraum hindurchgeführtes Kühlfluid im Lagerraum mindestens teilweise verdampft und das daraus abströmende Kühlfluid innerhalb des Lagerraums durch Wärmetausch kondensiert wird, wobei das aus dem Lagerraum abströmende Kühlfluid unter Erzeugung von mechanischer und elektrischer Energie entspannt wird, das Kühlfluid im entspannten Zustand durch Wärmetausch kondensiert und das flüssige Kühlfluid in den Lagerraum zurückgepumpt wird. Die beim Entspannen des Kühlfluids erzeugte Energie wird zum Zurückpumpen des flüssigen Kühlfluids verwendet.

Die DE 198 47 646 C1 beschreibt ein Sicherheitssystem für eine Kernreaktoranlage, die einen Druckbehälter zur Aufnahme eines Reaktorkerns umfasst, wobei an der Außenoberfläche des Druckbehälters eine thermisch ankoppelbare Wärmekraftmaschine vorgesehen ist. Von der Wärmekraftmaschine ist eine Einspeisereinrichtung zum Einspeisen eines Kühlfluids in den Druckbehälter antreibbar.

Aus der DE 10 2006 035 272 sind ein Verfahren und eine Vorrichtung zur Nutzung von Niedertemperaturwärme zur Stromerzeugung unter Verwendung von überkritischen Kohlendioxyd als Arbeitsmittel bekannt.

Aus der DE 26 34 780 A ist eine Notkühleinrichtung für gasgekühlte Kernreaktoren bekannt, welche eine durch den Reaktorkern hindurch verlaufende Kühlgasschleife mit einem Wärmetauscher enthält, wobei eine in die Kühlgasschleife eingeschaltete, von dem darin zirkulierenden Kühlgas angetriebene Gasturbine vorgesehen ist. Die Notkühleinrichtung umfasst weiterhin eine Sekundärkühlschleife, die durch den Wärmetauscher mit der Kühlgasschleife gekoppelt ist, einen in die Kühlgasschleife geschalteten Verdichter und eine in die Sekundärkühlschleife geschaltete Umlaufpumpe, wobei sowohl der Verdichter als auch die Umlaufpumpe von der Gasturbine angetrieben werden.

Zum Starten der Notkühleinrichtung ist eine Anlassvorrichtung für die Gasturbine vorgesehen.

Aus der DE 20 2004 013 299 ist ein ORC-Prozess bekannt, mit welchem die Umwandlung von Energie aus einer Wärmequelle in mechanische Energie bewerkstelligt wird.

Aus der US 3,506,539 ist eine Notkühleinrichtung für einen Reaktor bekannt, wobei die Reaktorwärme dazu genutzt wird, das Kühlmittel durch Konvektion durch den Reaktorkern zu treiben. Ähnliche Notkühleinrichtungen sind beispielsweise aus der DE 30 14 289 A1 und aus der WO 2008/125963 A2 bekannt.

Aus der US 5,360,056 A ist ein passives Kühlsystem als sogenanntes "TIPACS"-System (Temperature-Initiated Passive Cooling System) bekannt, welches einen Kühlkreislauf mit einem ersten und einem zweiten Wärmetauscher umfasst, welches als Kühlmittel eine Mischung aus CO₂ und Wasser umfasst. Der Kühlkreislauf ist als Naturumlauf ausgebildet, wobei ein äußerer Wärmetauscher auf einem höheren Niveau als ein innerer Wärmetauscher angeordnet ist.

Aus der DE 29 13 520 C2 ist ein Verfahren zur Wärmeabführung aus einem Lagerraum zur Zwischenlagerung verbrauchter nuklearer Brennelemente bekannt, bei welchem ein im Kreislauf durch den Lagerraum hindurchgeführtes Kühlfluid im Lagerraum mindestens teilweise verdampft und das daraus abströmende Kühlfluid außerhalb des Lagerraums durch Wärmetausch kondensiert wird. Das aus dem Lagerraum abströmende Kühlfluid wird unter Erzeugung von mechanischer Arbeit entspannt, wobei die Arbeit in Form von elektrischer Energie zur Umwälzung des Wärmeträgermediums verwendet wird.

Die CH 477625 A betrifft eine Gasturbinenanlage für Kernkraftwerke mit gasgekühltem Reaktor, wobei die Gasturbine zur Nach- bzw. Notkühlung mit dem aus dem Reaktor austretenden Kühlmittel betrieben wird.

Die US 4,755,352 B beschreibt ein Notkühlverfahren, bei dem neben einem Notkühlkreislauf ein weiterer Wasserkühlkreislauf betrieben wird, um die Abwärme aus dem Notkühlkreislauf abzuführen. Der Notkühlkreislauf ist als ORC-Prozess ausgestaltet.

Der Erfindung liegt daher die Aufgabe zugrunde, eine Einrichtung zur Notkühlung einer Anlage für exotherme Prozesse bereitzustellen, welche eine Kühlung auch unter erschwerten Bedingungen, beispielsweise bei Komplettverlust elektrischer Energie gewährleistet. Darüber hinaus soll die Einrichtung gemäß der Erfindung im Störfall selbsttätig wirksam werden und ohne einen entsprechend zu bemessenden Kühlwasservorrat auskommen.

Die Aufgabe wird gelöst mit den Merkmalen des Anspruchs 1, vorteilhafte Ausgestaltungen ergeben sich aus den Unteransprüchen.

Die Aufgabe wird weiterhin gelöst mit den Merkmalen des Anspruchs 12.

Auf diese Art und Weise kann eine vollständig passive Notkühlung gewährleistet werden.

In dem Kreisprozess wird die Prozesswärme in elektrische Arbeit umgesetzt, die zur Erzeugung von Notstrom bzw. zur Speisung anderer elektrischer Verbraucher innerhalb der Anlage dient.

Die Einrichtung gemäß der Erfindung ist selbstverständlich nicht auf die Abfuhr von Nachwärme aus Kernbrennstoffen beschränkt, sondern ist vielmehr auf alle Arten von exothermen Prozessen, beispielsweise auch in der chemischen Industrie anwendbar, bei welchen bei elektrischen Totallausfällen nennenswerte Mengen an Wärme abgeführt werden müssen.

Bei der Einrichtung zur Notkühlung gemäß der Erfindung ist vorgesehen, dass der zweite Wärmeträgerkreislauf wenigstens einen vorzugsweise Umgebungsluft durchströmbaren zweiten Wärmetauscher umfasst, über welchen Prozesswärme an die Umgebungsluft abführbar ist.

So kann in vorteilhafter Art und Weise auf eine Wasserverdampfung zur Kühlung und die damit einhergehende Infrastruktur verzichtet werden. Darüber hinaus ist es nicht erforderlich, eine entsprechende Kühlwasserversorgung sicherzustellen.

Bei der Einrichtung gemäß der Erfindung ist vorgesehen, dass der zweite Wärmetauscher zwangsdurchströmt ist, nämlich mittels eines Gebläses.

Der zweite Wärmeträgerkreislauf kann beispielsweise wenigstens eine Turbine und wenigstens einen Verdichter umfassen.

Bei der Erfindung ist vorgesehen, dass das Gebläse ausschließlich aus der mechanischen Arbeit des Kreisprozesses getrieben wird.

Bei einem entsprechend großen Kühler lässt sich so eine hinreichende Menge an thermischer Energie an die Umgebung abführen, ohne dass es dazu einer entsprechenden Infrastruktur bedarf.

Der Kreisprozess ist als geschlossener Joule-Prozess ausgebildet. Mit anderen Worten, als Wärmeträger kommt ein Medium in Betracht, welches nicht Wasser ist, so dass der Kreisprozess bei einem relativ geringen Temperaturunterschied von Prozesswärme zur Umgebungsluft bzw. von Wärmequelle zu Wärmesenke passiv ohne externe Stromversorgung und ohne externe Wasserversorgung vollständig autark betreibbar ist.

Als Wärmeträger ist in dem zweiten Wärmeträgerkreislauf überkritisches CO₂ vorgesehen. Überkritisches Kohlenstoffdioxid ist Kohlenstoffdioxid in einem fluiden Zustand über seiner kritischen Temperatur und seinem kritischen Druck, so dass dieses Eigenschaften von Gas und von Flüssigkeit miteinander vereint, d.h. ebenso dicht ist wie eine Flüssigkeit aber dieselbe Viskosität wie ein Gas besitzt. Das gewählte Arbeitsmedium hat den Vorzug, dass der pseudo-kritische Punkt zwischen den Temperaturen der Wärmesenke und der Wärmequelle liegt. Dadurch kann die Expansion in der Turbine im überkritischen Gasbereich erfolgen, während die Kompression im überkritischen und kompressiblen Flüssigkeitsbereich erfolgt, was den Wirkungsgrad ausreichend erhöht um die Maschine unter realen Bedingungen realisierbar zu machen. Durch das Nutzen des gewählten Arbeitsmediums, mit einer Dichte vergleichbar mit Flüssigkeiten, aber Fließeigenschaften wie ein Gas, kann weiterhin die Größe der Komponenten extrem kompakt gehalten werden, was überhaupt erst ein Nachrüstung in bestehende Anlagen ermöglicht.

Beispielsweise die Nachzerfallswärme bei einem abgeschalteten Reaktor entspricht anfänglich etwa 5 bis 10 % der thermischen Leistung des Reaktors im Normalbetrieb und klingt in einem Zeitraum von einigen Tagen ab. Ein thermodynamischer Kreisprozess mit beispielsweise überkritischem CO₂ als Wärmeträgermedium eignet sich in besonderem Maße dazu, diese Wärme abzuführen. Ebenfalls geeignet und zweckmäßig wäre beispielsweise als thermodynamischer Kreisprozess ein sogenannter "organic rankine cycle", bei welchem die Entspannungsmaschine typischerweise mit Silikonöl, Kältemittel oder brennbarem Gas betrieben wird. Ein solches Verfahren ist besonders dazu geeignet, Wärme abzuführen, wenn das zur Verfügung stehende Temperaturgefälle zwischen Wärmequelle und Wärmesenke verhältnismäßig niedrig und insbesondere zu niedrig für den Betrieb einer von Wasserdampf angetriebenen Turbine ist.
Als Wärmeträgermedium in dem zweiten Wärmeträgerkreislauf kommt überkritisches CO₂ alternativ in Mischung mit Wasser oder mit Propan oder in Mischung mit Butan oder Ethanol oder Methanol oder in Mischung mit Wasser mit Ethanol oder in Mischung mit Wasser mit Methanol in Betracht.
Zweckmäßigerweise umfasst der zweite Wärmeträgerkreislauf eine Turbine, einen Generator und einen Verdichter auf einer Welle.
Als Turbine kommt beispielsweise eine einstufige Axialturbine in Betracht, als Verdichter ein zweistufiger Axialverdichter.

Bei einer zweckmäßigen Variante der Notkühleinrichtung gemäß der Erfindung ist vorgesehen, dass der erste Wärmetauscher in der Kondensationskammer eines Siedewasserreaktors angeordnet ist. Bei Anwendung in einem Druckwasserreaktor kann der erste Wärmetauscher in dem Primärkreislauf eines Druckwasserreaktors oder im Containmentsumpf oder innerhalb des Druckhalter-Abblasebehälters angeordnet sein.

Alternativ kann der Wärmetauscher auch in einem Abklingbecken für abgebrannte Kernbrennelemente angeordnet werden.

Vorzugsweise ist wenigstens einer der Wärmeträgerkreisläufe, vorzugsweise der zweite Wärmeträgerkreislauf ohne Hilfsspannungsquelle selbststartend ausgebildet. Ohne Hilfsspannungsquelle im Sinne der Erfindung bedeutet, dass der geschlossene thermodynamische Kreisprozess ausschließlich durch die Prozesswärme des ersten Wärmeträgerkreislaufs getrieben in Gang setzbar ist, ohne dass es hierzu zusätzlicher Anstoßenergie bzw. Startenergie bedürfte.

Hierzu ist es zweckmäßig, wenn der erste und zweite Wärmetauscher mit einer geodätischen Höhendifferenz zueinander angeordnet sind, die so bemessen ist, dass der Wärmeträger bzw. das Wärmeträgermedium bei einer vorgebbaren Temperaturdifferenz einen Naturumlauf bildet. Hierzu können beispielsweise die Wärmetauscher mit einer geodätischen Höhendifferenz zwischen den Wärmetauschern von etwa 5 m bis 10 m angeordnet sein. Um einen Anlauf des Kreisprozesses zu bewirken, wäre beispielsweise eine Temperaturdifferenz von etwa 40 K zur Atmosphäre erforderlich. Ein in den Kreisprozess integrierter Generator würde bei einer solchen Konfiguration der Einrichtung keinen separaten Startstrom benötigen, der sonst über eine Hilfsspannungsquelle in Form eines Akkumulators oder einer Batterie zur Verfügung gestellt würde.

Zweckmäßigerweise ist wenigstens ein Wärmeträgerkreislauf, vorzugsweise der zweite Wärmeträgerkreislauf, mit selbsttätig temperatur- und/oder druckabhängig schließenden und/oder öffnenden Ventilen versehen. Je nach Druck- und/oder Temperaturdifferenz können die Ventile den Wärmeträgerkreislauf freigeben oder schließen, wobei ein Freigeben des Wärmeträgerkreislaufs eine Zirkulation des Wärmeträgers und somit ein Ingangsetzen des Kreisprozesses bewirkt.

Bei einer besonders vorteilhaften und zweckmäßigen Ausgestaltung der Einrichtung gemäß der Erfindung ist vorgesehen, dass in dem zweiten Wärmeträgerkreislauf in Strömungsrichtung vor dem ersten Wärmetauscher wenigstens eine Düse und hinter dem ersten Wärmetauscher wenigstens ein Diffusor vorgesehen ist. Durch die Düse erfolgt eine Beschleunigung des Wärmeträgers, wodurch eine adiabate Entspannung innerhalb der Düse die dynamische Temperatur des Wärmeträgers senkt. Hierdurch wird eine weitere Abkühlung des Wärmeträgers bewirkt, sodass diesem innerhalb des Wärmetauschers ein größerer Wärmestrom aufgeladen werden kann.

Beispielsweise kann der Wärmeträger vor dem Wärmetauscher von einer Geschwindigkeit von etwa Mach 0,05 auf eine Geschwindigkeit von zwischen Mach 0,4 und Mach 0,5 beschleunigt werden, wodurch eine Absenkung der dynamischen Temperatur des Wärmeträgers um etwa 20 K bis 30 K bewirkt wird.

Über den nachgeschalteten Diffusor wird eine entsprechende Verzögerung des Wärmeträgers bewirkt, wodurch der Ausgangsdruck vor der Düse nahezu wiederhergestellt wird. Durch die auf diese Art und Weise erhöhte Wärmebeladung des Wärmeträgers ergibt sich ein größeres Temperaturgefälle an dem zweiten Wärmetauscher, über welchen die Prozesswärme an die Umgebung abgeführt wird. Insgesamt wird dadurch weniger Gebläseleistung benötigt.

Als Wärmetauscher zur Verwendung in der erfindungsgemäßen Einrichtung zur Notkühlung haben sich insbesondere sogenannte "printed circuit heat exchanger" oder sogenannte "diffusion weldet heat exchanger" erwiesen.

Um einen möglichst leichten und einfachen Anlauf des erfindungsgemäß vorgesehenen Generators zu ermöglichen, kann die Generatorwelle beispielsweise passiv-magnetisch oder magneto-dynamisch gelagert sein. Zusätzlich oder alternativ kann ein getriebeloser Startergenerator vorgesehen sein, der ebenfalls passiv-magnetisch, magneto-dynamisch, elektromagnetisch und/oder hydrodynamisch gelagert sein.

Bei dem Verfahren ist vorgesehen, dass mit der Entspannung des Wärmeträgers elektrische Energie erzeugt wird, mittels welcher ein gebläseunterstützter Wärmetausch mit der Umgebungsluft bewerkstelligt wird.

Eine Kühlung ohne Gebläse oder mit Wasser oder eine hybride Kühlung mit Spritzwasser sind im Rahmen der Erfindung ebenfalls vorsehbar.

Vorzugsweise werden die Schritte a) bis d) unter Ausnutzung der Temperaturdifferenz zwischen der Atmosphäre und dem beladenen Wärmeträger ohne Hilfsspannungsquelle selbsttätig in Gang gesetzt.

Bei einer Variante des Verfahrens ist vorgesehen, dass eine Beschleunigung des zweiten Wärmeträgers vor der Beladung mit Prozesswärme und eine Verzögerung des zweiten Wärmeträgers vor der Entspannung erfolgt.

Das Verfahren gemäß der Schritte a) bis d) wird vorzugsweise als geschlossener thermodynamischer Kreisprozess, insbesondere als Joule-Prozess oder als ORC-Prozess betrieben.

Die Erfindung wird nachstehend anhand zweier Ausführungsbeispiele beschrieben.

Es zeigen:
- Fig. 1: eine schematischer Darstellung der Einrichtung zur Notkühlung gemäß der Erfindung,
- Fig. 2: die erfindungsgemäße Einrichtung zur Notkühlung in einem Siedewasserreaktor und
- Fig. 3: die erfindungsgemäße Einrichtung zur Notkühlung in einem Druckwasserreaktor.

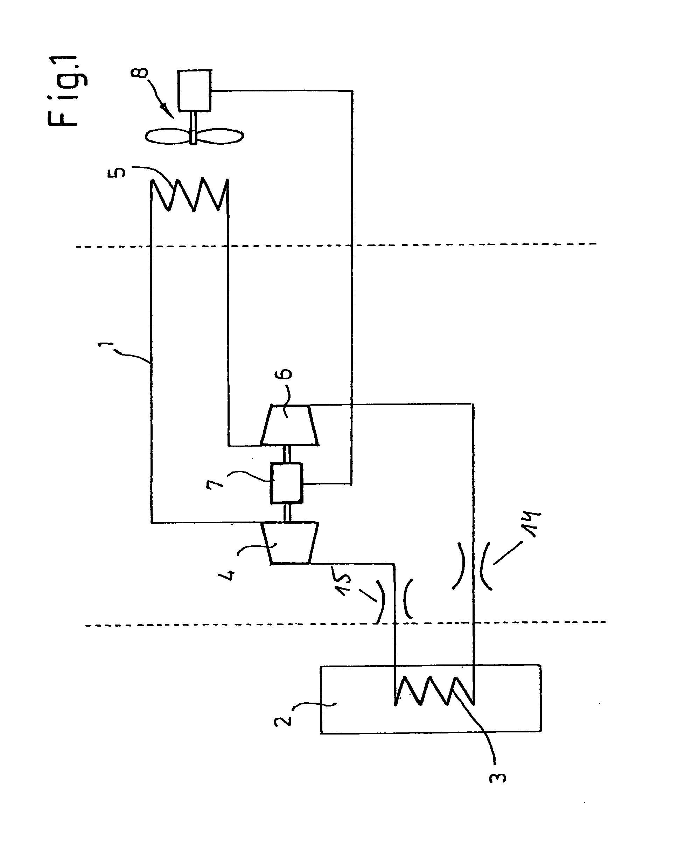

Es wird zunächst Bezug genommen auf Fig. 1. Die Einrichtung zur Notkühlung umfasst einen geschlossenen Wärmeträgerkreislauf 1 für einen Wärmeträger, beispielweise in Form von überkritischem CO₂. Dieser Wärmeträgerkreislauf 1 wurde vorstehend als zweiter geschlossener Wärmeträgerkreislauf bezeichnet.
Ein erster geschlossener Wärmeträgerkreislauf oder ein erster Wärmeträgerbehälter im Sinne der Erfindung ist Bestandteil einer bestehenden Anlage, beispielsweise eines herkömmlichen Kraftwerks, eines Kernkraftwerks oder einer chemischen Produktionsanlage. Diese Anlage ist schematisch in Fig. 1 als Wärmequelle 2 dargestellt. Diese kann sich beispielsweise, wie nachstehend auch beschrieben wird, innerhalb eines Reaktordruckbehälters eines Kernkraftwerks befinden. Der Wärmeträgerkreislauf 1 umfasst einen ersten Wärmetauscher 3 an oder in der Wärmequelle 2, eine Turbine 4, einen der Turbine 4 nachgeschalteten zweiten Wärmetauscher 5, einen dem zweiten Wärmetauscher nachgeschalteten Verdichter 6 sowie einen Generator 7, der zwischen der Turbine 4 und dem Verdichter 6, welcher auf einer gemeinsamen Welle mit der Turbine 4 und dem Verdichter 6 angeordnet ist. Der Generator 7 treibt ein Gebläse 8, welches eine Zwangsdurchströmung des als Luftwärmetauscher ausgebildeten zweiten Wärmetauschers 5 bewirkt. Der zweite Wärmetauscher 5 ist von seiner Größe so bemessen, dass er über das Gebläse 8 mit Umgebungsluft durchströmt, eine hinreichende Abfuhr der Prozesswärme aus der Wärmequelle 2 an die Umgebung ermöglicht. Wenn die Wärmequelle beispielsweise ein Temperaturniveau von ca. 80°C hat, kann das Wärmeträgermedium bzw. der Wärmeträger hinter dem ersten Wärmetauscher 3 beispielsweise einen Druck von 104 bar, eine Temperatur von 80°C bei einer Enthalpie von 466 KJ/kg besitzen. In der Turbine 4, die beispielsweise als einstufige Axialturbine ausgebildet ist, kann das Wärmeträgermedium auf einen Druck von 75 bar bei einer Enthalpie von 453KJ/kg entspannt werden. Wenn die Umgebungstemperatur etwa 31°C beträgt, kann in dem zweiten Wärmetauscher 5 das Wärmeträgermedium auf etwa 31 °C bei einem Druck von 74 bar und einer Enthalpie von 311 KJ/kg abgekühlt werden. Nach Verdichtung in dem Verdichter 6, der vorzugsweise als zweistufiger Axialverdichter ausgebildet ist, wird das Wärmeträgermedium auf einen Druck von etwa 106 bar bei einer Enthalpie von 318 KJ/kg verdichtet. Die Turbine 4, der Verdichter 6 und der Generator 7 können beispielsweise als Turbogeneratorverdichtereinheit ausgebildet sein. Es versteht sich, dass vorstehend die genannten Größen nur ein Beispiel für eine mögliche Auslegung der Einrichtung zur Notkühlung sind.

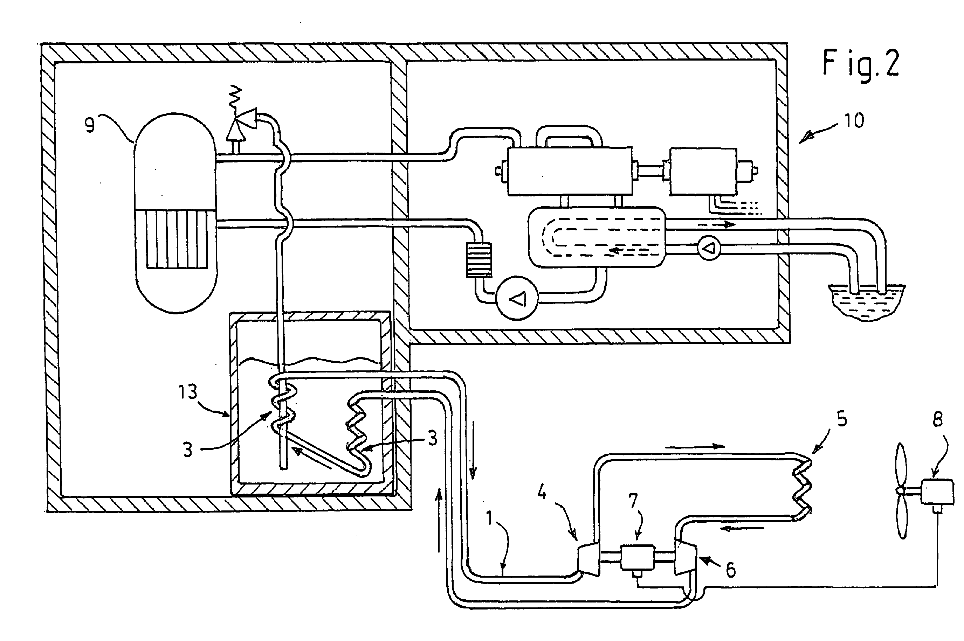

Fig. 2 zeigt schematisch die erfindungsgemäße Einrichtung zur Notkühlung an einem Siedewasserreaktor als Anlage für exotherme Prozesse. Der erste Wärmetauscher 3 ist in der Kondensationskammer 13 innerhalb des Reaktordruckbehälters 9 des Siedewasserreaktors 10 angeordnet.

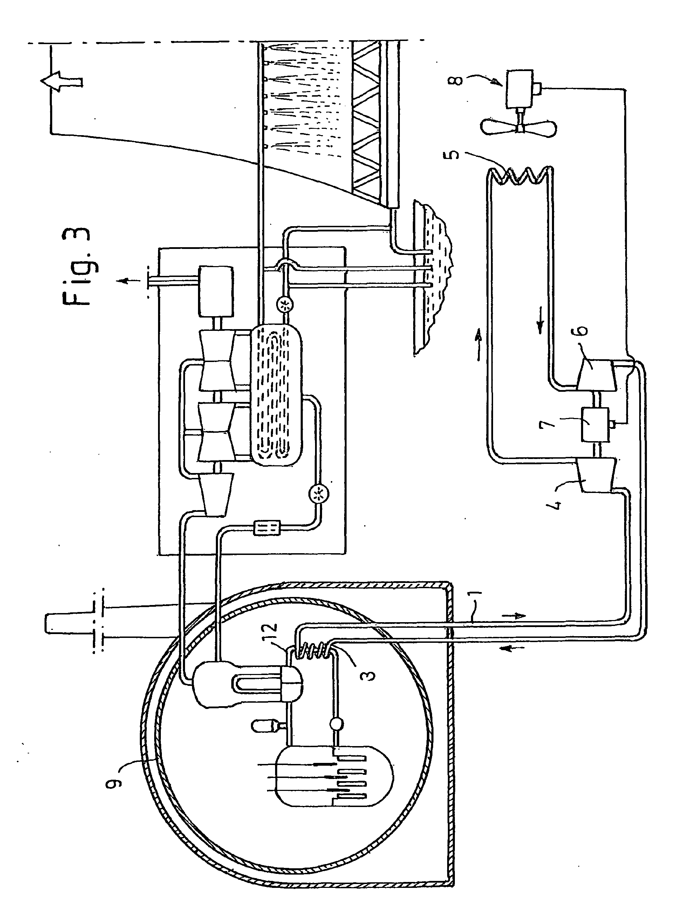

Fig. 3 zeigt die Einrichtung zur Notkühlung gemäß der Erfindung an einem Druckwasserreaktor 11, wobei der erste Wärmetauscher 3 in den Primärkreislauf 12 des Druckwasserreaktors 11 angeordnet ist. Im übrigen bezeichnen gleiche Bezugszeichen gleiche Bauteile.

Die Einrichtung zur Notkühlung gemäß der Erfindung liefert hinreichend elektrische Energie um bei Totalspannungsausfall außer einem Gebläse auch andere Einrichtungen innerhalb eines Kraftwerks zu speisen. Das System würde bei einer Temperaturdifferenz von etwa 30 K noch hinreichend Energie zum Antreiben des Kreisprozesses liefern.

Bei der in Figur 1 dargestellten Einrichtung zur Notkühlung gemäß der Erfindung ist dem ersten Wärmetauscher 3 eine Düse 14 vorgeschaltet, die gegebenenfalls auch einstellbar sein kann. Über diese Düse 14 wird eine Beschleunigung des Wärmeträgers in Form von überkritischem CO₂ von etwa Mach 0,05 auf etwa Mach 0,4 bis Mach 0,5 bewirkt, was eine Abkühlung des Wärmeträgers um etwa 20 K bis 30 K vor Eintritt in den Wärmetauscher 3 bewirkt. Hinter dem Wärmetauscher 3 ist ein Diffusor 15 vorgesehen, mit welchem der Wärmeträger entsprechend verzögert wird.

Der erste Wärmetauscher 3 und der zweite Wärmetauscher 5 sind mit einem geodätischen Höhenunterschied von etwa 5 m bis 10 m zueinander angeordnet, so dass das System alleine durch die Temperaturdifferenz zwischen dem ersten Wärmetauscher 3 und dem zweiten Wärmetauscher 5 anfahrbar ist, also der Wärmeträger innerhalb des Wärmeträgerkreislaufs 1 durch die Temperaturdifferenz getrieben umläuft und eine Hilfsspannungsquelle zum Starten des Generators 7 nicht erforderlich ist.

Innerhalb des Wärmeträgerkreislaufs 1 können temperatur- und/oder druckabhängig schaltbare Ventile angeordnet sein, die den Wärmeträgerkreislauf 1 bei Bedarf öffnen oder schließen um einen Anlauf der Notkühleinrichtung bei einer entsprechenden Temperaturdifferenz, beispielsweise bei einer Temperaturdifferenz von 40 K zur Atmosphäre zu bewerkstelligen.

### Bezugszeichenliste

- 1: Wärmeträgerkreislauf
- 2: Wärmequelle
- 3: erster Wärmetauscher
- 4: Turbine
- 5: zweiter Wärmetauscher
- 6: Verdichter
- 7: Generator
- 8: Gebläse
- 9: Reaktordruckbehälter
- 10: Siedewasserreaktor
- 11: Druckwasserreaktor
- 12: Primärkreislauf
- 13: Kondensationskammer
- 14: Düse
- 15: Diffusor

## Patentansprüche

1. Einrichtung zur Notkühlung einer Anlage für exotherme Prozesse mit wenigstens einem ersten Wärmeträger in einem geschlossenen Wärmeträgerkreislauf oder einem Wärmeträgerbehälter, umfassend wenigstens einen zweiten Wärmeträger in einem zweiten geschlossenen Wärmeträgerkreislauf (1), der über wenigstens einen ersten Wärmetauscher (3) mit dem ersten Wärmeträgerkreislauf oder dem Wärmeträgerbehälter gekoppelt ist, derart, dass der zweite Wärmeträgerkreislauf (1) mit Prozesswärme aus dem ersten Wärmeträgerkreislauf oder dem Wärmeträgerbehälter beladbar ist, wobei der zweite Wärmeträgerkreislauf (1) wenigstens einen zweiten Wärmetauscher (5) umfasst, über welchen Prozesswärme an die Umgebung abführbar ist, **dadurch gekennzeichnet, dass** der zweite Wärmeträgerkreislauf (1) als geschlossener thermodynamischer Kreisprozess ausgebildet ist, der ausschließlich von der Prozesswärme des ersten Wärmeträgerkreislaufs getrieben ist, dass der zweite Wärmetauscher (5) mittels wenigstens eines Gebläses (8) zwangsdurchströmt ist und dass das Gebläse (8) ausschließlich aus der mechanischen Arbeit des Kreisprozesses getrieben wird, dass der Kreisprozess als geschlossener Joule-Prozess ausgebildet ist und dass in dem zweiten Wärmeträgerkreislauf (1) als Wärmeträger überkritisches CO₂ vorgesehen ist, vorzugsweise in Mischung mit einer Substanz ausgewählt aus der Gruppe Wasser, Propan, Butan, Methanol, Methanol und Wasser, Ethanol, Ethanol und Wasser.

2. Einrichtung nach Anspruch 1, **dadurch gekennzeichnet, dass** der zweite Wärmeträgerkreislauf (1) wenigstens eine Turbine (4) und wenigstens einen Verdichter (6) umfasst.

3. Einrichtung nach einem der Ansprüche 1 oder 2, **dadurch gekennzeichnet, dass** der zweite Wärmeträgerkreislauf (1) eine Turbine (4), einen Generator (7) und einen Verdichter (6) auf einer gemeinsamen Welle umfasst.

4. Einrichtung nach einem der Ansprüche 2 oder 3, **dadurch gekennzeichnet, dass** die Turbine (4) als Axialturbine oder Radialturbine, insbesondere als einstufige Axialturbine ausgebildet ist und/oder dass der Verdichter (6) als Axialverdichter oder Radialverdichter, insbesondere als zweistufiger Axialverdichter ausgebildet ist.

5. Einrichtung nach einem der Ansprüche 1 bis 4, **dadurch gekennzeichnet, dass** der erste Wärmetauscher (3) in der Kondensationskammer eines Siedewasserreaktors (10), an den Primärkreislauf (12) eines Druckwasserreaktors (11) oder an den Sekundärkreislauf eines Dampferzeugers angeschlossen ist.

6. Einrichtung nach einem der Ansprüche1 bis 5, **dadurch gekennzeichnet, dass** wenigstens einer der Wärmeträgerkreisläufe (1) ohne Hilfsstromquelle selbsttätig startend ausgebildet ist.

7. Einrichtung nach einem der Ansprüche 1 bis 6, **dadurch gekennzeichnet, dass** der erste und der zweite Wärmetauscher (3, 5) mit einer geodätischen Höhendifferenz zueinander angeordnet sind, dass der Wärmeträger bei einer vorgebbaren Temperaturdifferenz einen Naturumlauf bildet.

8. Einrichtung nach einem der Ansprüche 1 bis 7, **dadurch gekennzeichnet, dass** wenigstens ein Wärmeträgerkreislauf (1) mit selbsttätig temperatur- und/oder druckabhängig schließenden und/oder öffnenden Ventilen versehen ist.

9. Einrichtung nach einem der Ansprüche 2 bis 8, **dadurch gekennzeichnet, dass** in dem zweiten Wärmeträgerkreislauf (1) in Strömungsrichtung vor dem ersten Wärmetauscher (3) wenigstens eine Düse und hinter dem ersten Wärmetauscher wenigstens ein Diffusor vorgesehen ist.

10. Verfahren zur Notkühlung einer Anlage für exotherme Prozesse mit wenigstens einem ersten Wärmeträger in einem geschlossenen Wärmeträgerkreislauf oder einem Wärmeträgerbehälter, unter Verwendung wenigstens eines zweiten Wärmeträgers in einem zweiten geschlossenen Wärmeträgerkreislauf (1), der über wenigstens einen ersten Wärmetauscher (3) mit dem ersten Wärmeträgerkreislauf oder mit dem Wärmeträgerbehälter gekoppelt ist, wobei das Verfahren folgende Schritte umfasst:
a) Verdichten des zweiten Wärmeträgers mit wenigstens einem Verdichter,
b) Beladen des zweiten Wärmeträgers mit der Prozesswärme des ersten Wärmeträgers,
c) Entspannen des zweiten Wärmeträgers in einer Turbine, die den Verdichter treibt,
d) Abkühlen des zweiten Wärmeträgers sowie Wiederholen der Schritte a) bis d) in der vorstehenden Reihenfolge, wobei die Abwärme des zweiten Wärmeträgers an die Atmosphäre abgegeben wird, **dadurch gekennzeichnet, dass** mit der Entspannung des Wärmeträgers elektrische Energie erzeugt wird, mittels welcher ein gebläseunterstützter Wärmetausch mit der Umgebungsluft bewerkstelligt wird, wobei als zweiter Wärmeträger überkritisches CO₂ Anwendung findet.

11. Verfahren nach Anspruch 10, **dadurch gekennzeichnet, dass** die Schritte a) bis d) unter Ausnutzung der Temperaturdifferenz zwischen der Atmosphäre und dem beladenen Wärmeträger ohne Hilfsspannungsquelle selbsttätig in Gang gesetzt werden.

12. Verfahren nach einem der Ansprüche 10 oder 11, **gekennzeichnet durch** eine Beschleunigung des zweiten Wärmeträgers vor der Beladung mit Prozesswärme und eine Verzögerung des zweiten Wärmeträgers vor der Entspannung.

## Claims

1. Arrangement for emergency cooling of a plant for exothermic processes having at least one first heat transfer medium in a closed heat transfer medium circuit or a heat transfer medium container, comprising at least one second heat transfer medium in a second closed heat transfer medium circuit (1), which is coupled via at least one first heat exchanger (3) to the first heat transfer medium circuit or the heat transfer medium container in such a way that the second heat transfer medium circuit (1) can be loaded with process heat from the first heat transfer medium circuit or the heat transfer medium container, the second heat transfer medium circuit (1) comprising at least one second heat exchanger (5), via which process heat can be dissipated to the surroundings, **characterized in that** the second heat transfer medium circuit (1) is formed as a closed thermodynamic cyclic process which is driven exclusively by the process heat from the first heat transfer medium circuit, **in that** there is a forcible flow through the second heat exchanger (5) by means of at least one blower (8) and **in that** the blower (8) is driven exclusively by the mechanical work from the cyclic process, **in that** the cyclic process is formed as a close Joule process, and **in that** supercritical CO₂ is provided as the heat transfer medium in the second heat transfer medium circuit (1), preferably in a mixture with a substance chosen from the group comprising water, propane, butane, methanol, methanol and water, ethanol, ethanol and water.

2. Arrangement according to Claim 1, **characterized in that** the second heat transfer medium circuit (1) comprises at least one turbine (4) and at least one compressor (6).

3. Arrangement according to either of Claims 1 and 2, **characterized in that** the second heat transfer medium circuit (1) comprises a turbine (4), a generator (7) and a compressor (6) on a common shaft.

4. Arrangement according to either of Claims 2 and 3, **characterized in that** the turbine (4) is constructed as an axial turbine or radial turbine, in particular as a single-stage axial turbine, and/or **in that** the compressor (6) is constructed as an axial compressor or radial compressor, in particular as a two-stage axial compressor.

5. Arrangement according to one of Claims 1 to 4, **characterized in that** the first heat exchanger (3) is in the condensation chamber of a boiling water reactor (10), is connected to the primary circuit (12) of a pressurized water reactor (11) or to the secondary circuit of a steam generator.

6. Arrangement according to one of Claims 1 to 5, **characterized in that** at least one of the heat transfer medium circuits (1) is designed to be self-starting without any auxiliary power source.

7. Arrangement according to one of Claims 1 to 6, **characterized in that** the first and the second heat exchanger (3, 5) are arranged with a geodetic difference in height with respect to each other, such that the heat transfer medium forms a natural circulation at a pre-definable temperature difference.

8. Arrangement according to one of Claims 1 to 7, **characterized in that** at least one heat transfer medium circuit (1) is provided with valves closing and/or opening automatically as a function of temperature and/or pressure.

9. Arrangement according to one of Claims 2 to 8, **characterized in that**, in the flow direction, at least one nozzle is provided in the second heat transfer medium circuit (1), before the first heat exchanger (3), and at least one diffuser is provided after the first heat exchanger.

10. Method for emergency cooling of a plant for exothermic processes having at least one first heat transfer medium in a closed heat transfer medium circuit or a heat transfer medium container, by using at least one second heat transfer medium in a second closed heat transfer medium circuit (1), which is coupled via at least one first heat exchanger (3) to the first heat transfer medium circuit or the heat transfer medium container, the method comprising the following steps:
a) compressing the second heat transfer medium with at least one compressor,
b) loading the second heat transfer medium with the process heat from the first heat transfer medium,
c) expanding the second heat transfer medium in a turbine, which drives the compressor,
d) cooling the second heat transfer medium, and repeating steps a) to d) in the above order, the waste heat from the second heat transfer medium being discharged to the atmosphere, **characterized in that** the expansion of the heat transfer medium is used to generate electrical energy, by means of which blower-assisted exchange of heat with the surrounding air is accomplished, the second heat transfer medium used being supercritical CO₂.

11. Method according to Claim 10, **characterized in that** steps a) to d) are started up automatically without any auxiliary power source by utilizing the temperature difference between the atmosphere and the loaded heat transfer medium.

12. Method according to either of Claims 10 and 11, **characterized by** acceleration of the second heat transfer medium before the loading with process heat, and retardation of the second heat transfer medium before the expansion.

## Revendications

1. Dispositif de refroidissement d'urgence d'une installation pour des processus exothermiques, comprenant au moins un premier fluide caloporteur dans un circuit de fluide caloporteur fermé ou un récipient pour fluide caloporteur, comprenant au moins un deuxième fluide caloporteur dans un deuxième circuit de fluide caloporteur fermé (1), qui est accouplé par le biais d'au moins un premier échangeur de chaleur (3) au premier circuit de fluide caloporteur ou au récipient pour fluide caloporteur, de telle sorte que le deuxième circuit de fluide caloporteur (1) puisse être chargé avec de la chaleur de processus provenant du premier circuit de fluide caloporteur ou du récipient pour fluide caloporteur, le deuxième circuit de fluide caloporteur (1) comprenant au moins un deuxième échangeur de chaleur (5), par le biais duquel la chaleur de processus peut être évacuée vers l'environnement, **caractérisé en ce que** le deuxième circuit de fluide caloporteur (1) est réalisé sous forme de processus cyclique thermodynamique fermé, qui est entraîné exclusivement par la chaleur de processus du premier circuit de fluide caloporteur, **en ce que** le deuxième échangeur de chaleur (5) est parcouru par force au moyen d'au moins une soufflante (8) et **en ce que** la soufflante (8) est entraînée exclusivement à partir du travail mécanique du processus cyclique, **en ce que** le processus cyclique est réalisé sous forme de processus Joule fermé, et **en ce que** dans le deuxième circuit de fluide caloporteur (1) est prévu, en tant que fluide caloporteur, du CO₂ surcritique, de préférence en mélange avec une substance choisie parmi le groupe constitué d'eau, de propane, de butane, de méthanol, de méthanol et d'eau, d'éthanol, et d'éthanol et d'eau.

2. Dispositif selon la revendication 1, **caractérisé en ce que** le deuxième circuit de fluide caloporteur (1) comprend au moins une turbine (4) et au moins un compresseur (6).

3. Dispositif selon l'une quelconque des revendications 1 ou 2, **caractérisé en ce que** le deuxième circuit de fluide caloporteur (1) comprend une turbine (4), un générateur (7) et un compresseur (6) sur un arbre commun.

4. Dispositif selon l'une quelconque des revendications 2 ou 3, **caractérisé en ce que** la turbine (4) est réalisée sous forme de turbine axiale ou de turbine radiale, en particulier sous forme de turbine axiale à un étage, et/ou **en ce que** le compresseur (6) est réalisé sous forme de compresseur axial ou de compresseur radial, en particulier sous forme de compresseur axial à deux étages.

5. Dispositif selon l'une quelconque des revendications 1 à 4, **caractérisé en ce que** le premier échangeur de chaleur (3) est raccordé, dans la chambre de condensation d'un réacteur à eau bouillante (10), au circuit primaire (12) d'un réacteur à eau sous pression (11) ou au circuit secondaire d'un générateur de vapeur.

6. Dispositif selon l'une quelconque des revendications 1 à 5, **caractérisé en ce qu'**au moins l'un des circuits de fluide caloporteur (1) est réalisé de manière à démarrer automatiquement sans source de courant auxiliaire.

7. Dispositif selon l'une quelconque des revendications 1 à 6, **caractérisé en ce que** le premier et le deuxième échangeur de chaleur (3, 5) sont disposés l'un par rapport à l'autre avec une différence de hauteur géodésique, **en ce que** le fluide caloporteur forme un circuit naturel dans le cas d'une différence de température prédéfinissable.

8. Dispositif selon l'une quelconque des revendications 1 à 7, **caractérisé en ce qu'**au moins un circuit de fluide caloporteur (1) est pourvu de soupapes se fermant et/ou s'ouvrant automatiquement en fonction de la température et/ou en fonction de la pression.

9. Dispositif selon l'une quelconque des revendications 2 à 8, **caractérisé en ce que** dans le deuxième circuit de fluide caloporteur (1), dans la direction de l'écoulement avant le premier échangeur de chaleur (3), est prévue au moins une buse, et, derrière le premier échangeur de chaleur, au moins un diffuseur.

10. Procédé de refroidissement d'urgence d'une installation pour des processus exothermiques, comprenant au moins un premier fluide caloporteur dans un circuit de fluide caloporteur fermé ou un récipient pour fluide caloporteur, utilisant au moins un deuxième fluide caloporteur dans un deuxième circuit de fluide caloporteur fermé (1), qui est accouplé par le biais d'au moins un premier échangeur de chaleur (3) au premier circuit de fluide caloporteur ou au récipient de fluide caloporteur, le procédé comprenant les étapes suivantes :
a) compression du deuxième fluide caloporteur avec au moins un compresseur,
b) chargement du deuxième fluide caloporteur avec la chaleur de processus du premier fluide caloporteur,
c) détente du deuxième fluide caloporteur dans une turbine, qui entraîne le compresseur,
d) refroidissement du deuxième fluide caloporteur et répétition des étapes a) à d) dans l'ordre susmentionné, la chaleur perdue du deuxième fluide caloporteur étant libérée dans l'atmosphère, **caractérisé en ce qu'**avec la détente du fluide caloporteur est générée de l'énergie électrique au moyen de laquelle est réalisé un échange thermique avec l'air environnant, de manière assistée par une soufflante, le deuxième fluide caloporteur utilisé étant du CO₂ surcritique.

11. Procédé selon la revendication 10, **caractérisé en ce que** les étapes a) à d) sont mises en route automatiquement en exploitant la différence de température entre l'atmosphère et le fluide caloporteur chargé sans source de tension auxiliaire.

12. Procédé selon l'une quelconque des revendications 10 ou 11, **caractérisé par** une accélération du deuxième fluide caloporteur avant la charge avec la chaleur de processus et un ralentissement du deuxième fluide caloporteur avant la détente.
